# EUROPÄISCHE PATENTSCHRIFT

(11) **EP 2 828 121 B1**
(45) Veröffentlichungstag und Bekanntmachung des Hinweises auf die Patenterteilung: **27.11.2019**
(21) Anmeldenummer: 13713747.7
(22) Anmeldetag: 20.03.2013
(51) Int. Cl.: B60N 2/75

(54) **HALTERUNG FÜR EINE BEDIENKONSOLE IN EINEM FLUGZEUGSITZ**
HOLDER FOR AN OPERATING CONSOLE IN AN AIRCRAFT SEAT
SUPPORT POUR UNE CONSOLE DE COMMANDE DANS UN SIÈGE D'AVION

(30) Priorität: 23.03.2012 DE 102012204736
(43) Veröffentlichungstag der Anmeldung: 28.01.2015
(73) Patentinhaber: Lufthansa Technik AG, 22335 Hamburg (DE)
(72) Erfinder: TER HASEBORG, Jan, Remmer, 21244 Buchholz (DE); DAUBNER, Viktor, 22763 Hamburg (DE)
(74) Vertreter: Müller Verweyen
(86) Internationale Anmeldenummer: PCT/EP2013/000841
(87) Internationale Veröffentlichungsnummer: WO 2013/139474

(56) Entgegenhaltungen:
- US-A- 5 529 265
- US-A1- 2011 024 470
- US-A1- 2011 278 885

## Beschreibung

Die Erfindung betrifft eine Halterung für eine Bedienkonsole oder ein Anzeigegerät an einem Flugzeugsitz mit den Merkmalen des Oberbegriffs von Anspruch 1.

Bedienkonsolen werden z.B. zur Bedienung von Entertainment-Einheiten, zur Steuerung der Bewegung von verstellbaren Einheiten des Flugzeugsitzes oder auch zur Kommunikation mit dem Flugpersonal verwendet. Die Bedienkonsolen werden nach den im Stand der Technik bekannten Lösungen in einer Aufnahme in der Armlehne, der Rückenlehne oder sonstigen Verkleidungen des Flugzeugsitzes gehalten und können bedarfsweise zu einer mobilen Betätigung aus der Aufnahme entnommen werden.

Dokument US 2011/0278885 A1 offenbart eine Halterung mit einem Haltearm, von dem die Bedienkonsole gehalten werden kann.

Die Bedienkonsole ist in einer Sicherungsstellung festlegbar, um die Bedienkonsole in bestimmten Flugsituationen, wie z.B. Start oder Landung, sowie ggf. im Crashfall sicher zu halten und eine Verletzung von Passagieren durch eine in der Kabine des Flugzeugs umherfliegende Bedienkonsole zu vermeiden. In der Sicherungsstellung ist die Bedienkonsole in einer Schale als Halterung angeordnet, die die Bedienkonsole umschließt und nur eine Seite der Bedienkonsole erkennbar lässt. Die seitliche Umfassung durch die Schale sichert die Bedienkonsole in der Sicherungsstellung gegen ungewolltes Herausrutschen.

Damit die Bedienkonsole in der Aufnahme ergonomisch griffgünstig bedienbar ist, muss die Aufnahme in Bezug zu dem Bediener in einer griffgünstigen Position angeordnet sein, da die Bedienkonsole in der Aufnahme selbst nicht mehr ausgerichtet werden kann. Da der Flugzeugsitz grundsätzlich von Insassen verschiedener Körpergröße und körperlichen Verhältnissen allgemein verwendet wird und die Sitzstellung des Flugzeugsitzes in der Regel veränderbar ist, kann die Bedienbarkeit der Bedienkonsole durch die Anordnung der Aufnahme immer nur für wenige Körpergrößen und Sitzstellungen bestmöglich ausgelegt werden. Die Aufnahme der Bedienkonsole ist üblicherweise flach auf einer Armlehne des Flugzeugsitzes angeordnet.

Vor diesem Hintergrund ist es die Aufgabe der Erfindung, eine Halterung für eine Bedienkonsole in einem Flugzeugsitz zu schaffen, welche eine verbesserte Bedienbarkeit der Bedienkonsole für unterschiedliche Bediener und Sitzpositionen ermöglicht.

Die Aufgabe wird erfindungsgemäß durch eine Halterung mit den Merkmalen des Anspruchs 1 gelöst. Weitere bevorzugte Weiterentwicklungen sind den Unteransprüchen, der Beschreibung und den zugehörigen Figuren zu entnehmen.

Nach Anspruch 1 wird zur Lösung der Aufgabe eine Halterung für eine Bedienkonsole oder ein Anzeigegerät an einem Flugzeugsitz vorgeschlagen, wobei die Halterung in einer Armlehne, Rückenlehne oder der Verkleidung des Flugzeugsitzes angeordnet ist, und die Bedienkonsole von der Halterung abnehmbar ist. In der nachfolgenden Beschreibung der Erfindung wird diese repräsentativ anhand einer Bedienkonsole beschrieben, wobei diese grundsätzlich auch stellvertretend als ein reines Anzeigegerät angesehen werden kann. Erfindungsgemäß weist die Halterung einen Haltearm auf, von dem die Bedienkonsole gehalten werden kann. Weiterhin ist die an dem Haltearm gehaltene Bedienkonsole in einer Sicherungsstellung in der Halterung festlegbar und aus der Sicherungsstellung in eine Präsentierstellung bewegbar. Die Bedienkonsole ist nur in der Präsentierstellung von dem Haltearm abnehmbar, und die Bedienkonsole ist in der Präsentierstellung um wenigstens eine Schwenkachse verschwenkbar.

Die Bedienkonsole oder das Anzeigegerät kann durch den Haltearm aus der Sicherungsstellung in eine Präsentierstellung aufgestellt und ausgerichtet werden. Die Ausrichtung der Bedienkonsole in einer Präsentierstellung durch Verschwenken ist für eine bessere Bedienbarkeit vorteilhaft, weil auf diese Weise der Blick des Bedieners in jeder Sitzposition auf die Bedienkonsole möglich ist, und somit deren Bedien- und Erreichbarkeit verbessert wird, ohne dass der Bediener die Bedienkonsole abnehmen muss. Es ist daher nicht notwendig z.B. in einer Liegeposition des Sitzes die Bedienkonsole in der Hand zu halten oder auf dem Sitz oder dem Körper des Bedieners abzulegen. Dies ist insbesondere für die Verwendung von Bedienkonsolen mit kontaktsensitiven Bildschirmen für die Bedienbarkeit vorteilhaft. Der Passagier bzw. Bediener kann die Bedienkonsole oder das Anzeigegerät so verschwenken und ausrichten, dass er unabhängig von seiner Körpergröße und Sitzposition einen weitgehend senkrechten Blick auf die Bedienfläche der Bedienkonsole, insbesondere auf einen möglichen kontaktsensitiven Bildschirm der Bedienkonsole, oder auf das Anzeigegerät, das ein Bildschirm sein kann, hat, ohne dass diese von dem Haltearm und von der Armlehne, Rückenlehne oder der Verkleidung des Flugzeugsitzes abgenommen werden muss. Ein möglichst senkrechter Blickwinkel ist insbesondere für die Ablesbarkeit von Bildschirmen vorteilhaft. Die Möglichkeit für den Bediener, die Bedienkonsole oder das Anzeigegerät abzunehmen und entsprechend zu bedienen oder zu betrachten, bleibt weiterhin erhalten, um z.B. eine kontinuierliche Handhabung für die Steuerung von Spielen zu ermöglichen.

In vorteilhaften Ausführungsformen kann die Bedienkonsole oder das Anzeigegerät dauerhaft mit der Halterung verbunden sein. Die dauerhafte Verbindung kann beispielsweise über eine Kabel- und/oder Seilverbindung zwischen Bedienkonsole bzw. Anzeigegerät und der Halterung ausgeführt werden. Aufgrund der Seilverbindung kann die Bedienkonsole bzw. das Anzeigegerät von der Halterung abnehmbar sein und in einem begrenzten Abstand genutzt werden, wobei gleichzeitig die dauerhafte Verbindung erhalten bleiben kann. Die Aufgabe der Erfindung kann somit ebenfalls von einer Halterung mit einer Bedienkonsole oder mit einem Anzeigegerät an einem Flugzeugsitz gelöst werden.

Weiter wird vorgeschlagen, dass der Haltearm mehrere die Bedienkonsole an ihrer äußeren Randseite umfassende Finger aufweist. Durch die Finger an dem Haltearm wird eine Art Rahmen geschaffen, in dem die Bedienkonsole zumindest nach drei Seiten gegen ein Herausrutschen gesichert ist. Die Finger können dabei so angeordnet sein, dass ein einseitig offenes Einschubfach gebildet wird, in das die Bedienkonsole in einer Richtung einschieb- und wieder herausnehmbar ist. Vorzugsweise ist die Bedienkonsole in dieser Richtung aus der Halterung abnehmbar.

Die Sicherung gegen ein Herausrutschen der Bedienkonsole von dem Haltearm kann eine in mehrere Richtungen freie Anordnung der Bedienkonsole in der Sicherungsstellung ermöglichen. Auf eine Schale zur Sicherung der Bedienkonsole in der Sicherungsstellung kann dadurch verzichtet werden, was neben einer Gewichtsreduzierung der Halterung ein leichteres Erscheinungsbild der Halterung und insbesondere der Bedienkonsole ermöglicht. Es werden verschiedene Ausführungsformen mit verschiedenen Freischnitten oder nur einseitig der Halterung zugewandten Bedienkonsolen in der Halterung möglich. Die Bedienkonsole in der Sicherungsstellung der Halterung kann dadurch den Eindruck erwecken, dass die Bedienkonsole beispielsweise über der Armlehne zu schweben scheint.

Ferner wird vorgeschlagen, dass die Bedienkonsole mindestens eine Fingeraufnahme aufweist, in die der Haltearm mit mindestens einem Finger einführbar ist. Durch den in die Fingeraufnahme eingeführten Finger kann die Bedienkonsole alternativ oder zusätzlich an dem Haltearm gehalten sein.

Vorteilhafterweise wird die Bedienkonsole an dem Haltearm durch wenigstens einen in der Bedienkonsole und/oder im Haltearm angeordneten Magneten gehalten. Der Magnet kann die Bedienkonsole in der Sicherungsstellung und/oder in der Präsentierstellung am Haltearm halten, wobei die Lösbarkeit in der Präsentierstellung für den Passagier oder auch Bediener durch Überwinden der Magnetkraft zwischen dem Magneten und dem entsprechenden Gegenstück möglich ist. Die Fixierung bzw. Abnehmbarkeit vom Haltearm kann auf diese Weise ohne bewegliche Teile, wie z.B. Federklemmen, realisiert werden, was für die Haltbarkeit der Halterung vorteilhaft ist. Eine Kombination mit einer mechanischen Führung durch den Haltearm ist vorteilhaft.

Eine besonders einfach zu realisierende Schwenkbarkeit der Bedienkonsole kann ferner dadurch verwirklicht sein, indem der Haltearm mittels eines Kugelgelenks an der Aufnahme und/oder die Bedienkonsole mittels eines Kugelgelenks an dem Haltearm gehalten sind. Das oder die Kugelgelenke ermöglichen dabei nicht nur ein Verschwenken der Bedienkonsole um orthogonal zueinander ausgerichteten Schwenkachsen, sondern auch ein Verschwenken um beliebige Zwischenachsen, wobei die mögliche Verwendung zweier Kugelgelenke zusätzliche Freiheitsgrade der Verstellbarkeit schafft. Ferner sind Kugelgelenke grundsätzlich eine sehr einfach zu realisierende und konstruktiv stabile Art der schwenkbaren Lagerung des Haltearmes bzw. der Bedienkonsole, welche beispielsweise durch einen einfachen Clipsvorgang montiert werden können.

Erfindungsgemäß ist das Kugelgelenk dazu eingerichtet, den Haltearm beim Überschreiten einer definierten Last freizugeben. Dies kann aus Sicherheitsaspekten vorteilhaft sein, um Verletzungen von Passagieren bei einem schlagartigen Kontakt mit dem Haltearm und/oder der Bedienkonsole zu vermeiden. Weiterhin kann eine Schädigung der Halterung durch schlagartigen Kontakt und/oder durch das Aufbringen von Missbrauchskräften vermieden werden. Vorzugsweise erfolgt eine Freigabe der Kugel des Kugelgelenks nach oben. Die definierte Last wird konstruktiv nach den Gesichtspunkten der Verletzungsvermeidung festgelegt.

Alternativ kann die Verschwenkbarkeit der Bedienkonsole auch dadurch verwirklicht werden, indem der Haltearm eine kardanische Aufhängung in der Aufnahme aufweist, oder indem die Bedienkonsole eine kardanische Aufhängung an dem Haltearm aufweist.

Erfindungsgemäß sind die Schwenkachsen des Haltearms in der Sicherungsstellung durch mindestens ein Blockadeelement festlegbar. In der Sicherungsstellung ist die Bedienkonsole gegen ein Herausfallen oder Herausrutschen gesichert. Zudem ist es vorteilhaft, wenn die Bedienkonsole in dieser gesicherten Position keine Rotation um eine Schwenkachse ausführt, so dass beispielsweise im Crashfall keine Kanten in Richtung des Bedieners zeigen können, um Verletzungen zu vermeiden. Das Blockadeelement oder die Blockadeelemente können neben der Festlegung der Schwenkbewegung die Abnehmbarkeit der Bedienkonsole in der Sicherungsstellung verhindern. Das Blockadeelement ist vorzugsweise durch manuellen Eingriff des Bedieners lösbar.

Erfindungsgemäß weist die Halterung einen Sicherungsstift auf, wobei der Sicherungsstift wenigstens in der Sicherungsstellung in die Bedienkonsole eingreift. Hierdurch wird in vorteilhafter Weise erreicht, dass die Bedienkonsole in der Sicherungsstellung in der Entnahmerichtung gegen eine Bewegung aus dem Haltearm heraus blockiert ist. Die Ausführungsform mit einem Sicherungsstift führt hierbei in einfacher Weise dazu, dass eine Entnahme der Bedienkonsole möglich ist, sobald der Haltearm mit der Bedienkonsole aus der Sicherungsstellung bewegt wird.

Vorzugsweise weist die Halterung eine Feder auf, welche die Bedienkonsole nach dem Befreien aus der Sicherungsstellung in eine vorbestimmte Stellung ausrichtet. Dies ist insbesondere sinnvoll, wenn die Festlegung in der Sicherungsstellung durch einen Bediener aufgehoben wird, so dass die Feder die Bedienkonsole aktiv aus der Sicherungsstellung herausbewegt. Die vorbestimmte Stellung ist eine mögliche Präsentierstellung, die vorteilhafterweise für den Benutzer optisch von der Sicherungsstellung zu unterscheiden ist und ein einfaches Greifen und Ausrichten der Bedienkonsole am Haltearm ermöglicht.

Ferner wird vorgeschlagen, dass die Halterung eine Aufnahme aufweist, die in der Sicherungsstellung die Bedienkonsole in der Halterung festlegt. Die Aufnahme ist durch eine geometrisch an die Außenform der Bedienkonsole angepasste Vertiefung gebildet. Die Aufnahme in Form der geometrisch angepassten Vertiefung und die vorgeschlagene Anordnung der Schwenkachse ermöglicht ein vollständiges Versenken der Bedienkonsole in einer Fläche des Flugzeugsitzes bei einer entsprechenden Bemessung der Tiefe der Vertiefung sowie eine gleichzeitig günstig zu handhabende Lösebewegung der Bedienkonsole aus der Vertiefung durch eine Schwenkbewegung der Bedienkonsole aus der Vertiefung heraus.

Vorzugsweise ist zwischen der Halterung und dem Haltearm ein Puffer angeordnet, welcher eine elastische Nachgiebigkeit aufweist. Die elastische Nachgiebigkeit ist vorzugsweise so bemessen, dass der Haltearm in der üblichen Handhabung nur eine geringe elastische Verformung aufweist, jedoch beim Einwirken von Missbrauchskräften, beispielsweise zum Schutz des Bedieners und/oder der mechanischen Struktur der Halterung, nachgibt.

In einer vorteilhaften Ausführungsform ist die Bedienkonsole um eine Achse drehfest am Haltearm angeordnet, wobei die Achse orthogonal zu der Schwenkachse steht. Hierdurch wird ein seitliches Kippen der Bedieneinrichtung ausgeschlossen, was insbesondere bei bildschirmbasierten Bedienkonsolen oder Anzeigegeräten vorteilhaft ist, um ein ungewünschtes Schrägbild zu vermeiden.

Die Erfindung wird im Folgenden anhand bevorzugter Ausführungsformen unter Bezugnahme auf die beigefügten Figuren erläutert. Dabei zeigt:
- Fig. 1:: eine Bedienkonsole mit einem Haltearm;
- Fig. 2:: eine Bedienkonsole in der Präsentierstellung;
- Fig. 3:: eine Bedienkonsole in der Sicherungsstellung;
- Fig. 4:: eine Bedienkonsole in einer von einem Haltearm gelösten Stellung; und
- Fig. 5:: eine weitere Bedienkonsole in einer von einem Haltearm gelösten Stellung.

Die folgenden Ausführungsbeispiele sind auf eine Bedienkonsole bezogen, die eine Benutzerschnittstelle zur Bedienung und ergänzend Darstellungselemente, wie beispielsweise Bildschirme, oder kombinierte Darstellungs- und Eingabeelemente, wie beispielsweise kontaktsensitive Bildschirme, aufweist. Die Ausführungsbeispiele sind analog auch für reine Anzeigegeräte möglich.

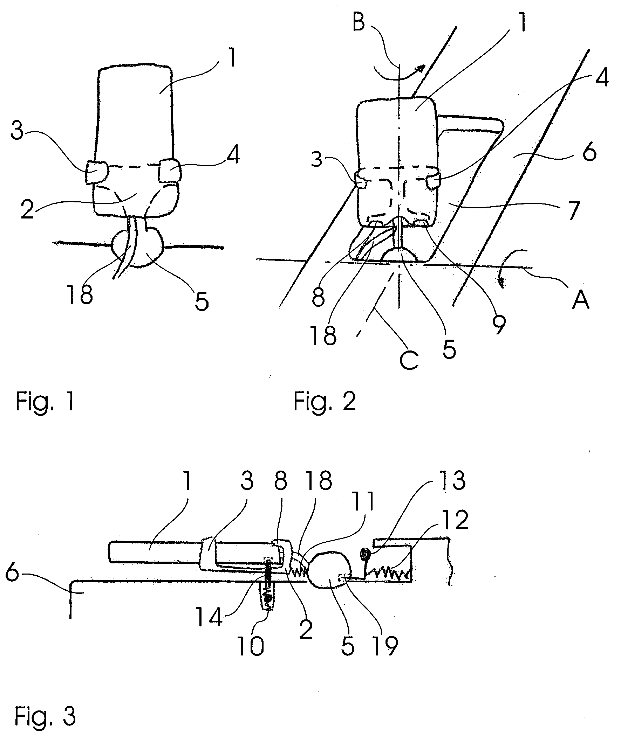

In der Figur 1 ist eine nicht beanspruchte Bedienkonsole 1 zu erkennen, welche an einem Haltearm 2 gehalten ist, der die Bedienkonsole 1 an ihrem äußeren Rand seitlich mit zwei Fingern 3 und 4 umfasst. Der Haltearm 2 weist an seinem Ende ein Kugelgelenk 5 auf, mit dem er, wie nachfolgend noch beschrieben wird, schwenkbar gelagert ist. Der Haltearm 2 ist in diesem Beispiel durch eine dreieckige Grundplatte mit zwei seitlichen Fingern 3 und 4 gebildet, welche ein nach oben offenes Einschubfach bilden, in das die Bedienkonsole 1 von oben eingeschoben werden kann.

Die Bedienkonsole 1 ist durch ein elektrisches Kabel 18 mit der Halterung zur weiteren Übertragung von Bediensignalen verbunden, wobei die Halterung bevorzugt einen Freiraum aufweisen kann, in dem ein Vorrat eines elektrischen Kabels 18 der Bedienkonsole 1 aufnehmbar ist. Dadurch können die Verkabelung und die Leitungsführung im Allgemeinen insoweit vereinfacht werden, dass die Leitung den Bewegungsvorgang und insbesondere die Abnehm- und Ablegebewegung der Bedienkonsole 1 auf den Haltearm 2 nicht behindert.

In der Figur 2 ist ein nicht beanspruchtes leicht weiterentwickeltes Beispiel zu erkennen, bei der der Haltearm 2 durch eine X-förmige Grundplatte mit vier die Bedienkonsole 1 seitlich umfassenden Fingern 3,4,8 und 9 gebildet ist. Der Haltearm 2 ist an seinem Ende ebenfalls mit einem Kugelgelenk 5 versehen, mit dem er in einem Randabschnitt einer Aufnahme 7 schwenkbar gelagert ist. Die Aufnahme 7 weist eine an die rechteckige Außenform der Bedienkonsole 1 angepasste Geometrie auf und ist in einer Armlehne 6 eines Flugzeugsitzes angeordnet. Die Aufnahme 7 ist durch eine Vertiefung gebildet und in der Tiefe derart bemessen, dass die Bedienkonsole 1 darin vollständig in der Sicherungsstellung aufnehmbar ist.

Die Bedienkonsole 1 befindet sich in der gezeigten Stellung in einer Präsentierstellung, in der die Bedienkonsole 1 aus der Aufnahme 7 herausbewegt ist und dem Bediener dadurch näher und zugewandt ist. Ferner ist die Bedienkonsole 1 durch die Lagerung in dem Kugelgelenk 5 um eine zu einer Randseite der Aufnahme 7 parallele Schwenkachse A in Pfeilrichtung verschwenkbar, die in diesem Beispiel auch die Bewegung aus der Sicherungsstellung heraus ermöglicht, so dass der Bediener die Bedienkonsole 1 bei Bedarf näher zu sich heran oder von sich weg verschwenken kann. Ferner ist die Bedienkonsole 1 durch Drehen des Haltearmes 2 in dem Kugelgelenk 5 um eine zweite zu der Schwenkachse A orthogonalen Schwenkachse B und/oder C schwenkbar bzw. drehbar, wodurch die Bedienkonsole 1, z.B. zwecks einer verbesserten Ablesbarkeit oder einer verbesserten Erreichbarkeit, verschwenkt werden kann.

In einem weiteren nicht beanspruchten Beispiel ist ein Verschwenken der Bedienkonsole 1 an dem Haltearm 2 um die Achse C nicht möglich, so dass ein seitliches Kippen der Bedienkonsole 1 verhindert wird.

In der Figur 3 ist ein erfindungsgemäßes Ausführungsbeispiel der Bedienkonsole 1 in einer Sicherungsstellung zu erkennen. Die Bedienkonsole 1 ist in diesem Ausführungsbeispiel nicht durch eine Aufnahme 7 seitlich umschlossen, sondern frei auf einer Armlehne positioniert. Ein Sicherungsstift 14 sichert die Bedienkonsole 1 in der Sicherungsposition gegen ein Abnehmen oder ein Herausrutschen von dem Haltearm 2.

Die Sicherungsstellung wird vorzugsweise durch ein Blockadeelement 19 gesichert und festgelegt. Das Blockadeelement 19 greift in diesem Ausführungsbeispiel in der Sicherungsstellung in das Kugelgelenk 5 ein und blockiert ein Verschwenken des Haltearms 2. Die Sicherungsstellung kann durch manuelles Betätigen des Betätigungselements 13 gelöst werden. Das Betätigungselement 13 wird zur Entriegelung der Bedienkonsole 1 gegen die Federkraft der Feder 12 verschoben. Das Blockadeelement 19 wird dadurch aus dem Eingriff in dem Kugelgelenk 5 bewegt, wodurch die Bewegung des Haltearms 2 freigeben wird.

In diesem Ausführungsbeispiel drückt der Sicherungsstift 14 in der Sicherungsstellung durch eine Feder 10 federbelastet gegen das Bedienelement 1, so dass der Haltearm 2 mit dem Bedienelement 1 nach dem Lösen der Sicherungsstellung nach oben in eine vorbestimmte Stellung oder auch Startstellung gedrückt wird, so dass das Blockadeelement 19 in dieser Stellung des Haltearms 2 nicht mehr in das Kugelgelenk 5 eingreifen kann. Daher führt in diesem Ausführungsbeispiel ein einmaliges Betätigen des Betätigungselements 13 zu einer Bewegung der Bedienkonsole 1 aus der Sicherungsstellung in eine Start- oder auch Präsentierstellung. Die Feder 10 kann, wie in Figur 3 dargestellt, mit dem Sicherungsstift 14 kombiniert sein. Die vorbestimmte Stellung kann Teil der Präsentierstellung sein, in der die Bedienkonsole 1 mit dem Haltearm 2 leichter ergriffen und manuell bewegt werden kann. Die Startstellung kann sich in einem möglichen Ausführungsbeispiel von der Präsentierstellung unterscheiden, wobei das Abnehmen der Bedienkonsole 1 von der Halterung aus der Startposition noch nicht möglich ist, und die Bedienkonsole 1 zunächst manuell in eine Präsentierstellung bewegt werden muss.

Im Ausführungsbeispiel aus Figur 2 ragt die in die vorbestimmte Stellung bewegte Bedienkonsole 1 zumindest geringfügig über den Rand der Aufnahme 7 und kann dadurch durch den Bediener oder Passagier ergriffen werden.

Der Bediener kann die Bedienkonsole 1 in der Startposition greifen und nach eigenen Wünschen durch Schwenken ausrichten. Wahlweise kann der Bediener die Bedienkonsole 1 von dem Haltearm 2 abnehmen und die Bedienkonsole 1 im Bereich seines Sitzes frei positionieren.

Weiterhin kann der Bediener die Bedienkonsole 1 anschließend wieder auf den Haltearm 2 stecken. Für die Festlegung in der Sicherungsstellung drückt der Bediener die Bedienkonsole 1 entgegen der Kraft der Feder 10 in die Sicherungsstellung. In der Sicherungsstellung greift das vorzugsweise federbelastete Blockadeelement 19 in das Kugelgelenk 5 ein. Der Sicherungsstift 14 greift in dieser Stellung in eine Ausnahme der Bedienkonsole ein. Die Bedienkonsole 1 ist durch das Blockadeelement 19 und den Sicherungsstift 14 in der Sicherungsstellung gehalten.

Zwischen dem Kugelgelenk 5 und dem Haltearm 2 ist außerdem ein Puffer 11 vorgesehen, welcher das Bewegungsverhalten unter normalen Bedingungen im Wesentlichen nicht beeinflusst, aber bei großen auf die Bedienkonsole 1 oder den Haltearm 2 einwirkenden Kräften ein Ausweichen derselben ermöglichen soll, so dass die Wahrscheinlichkeit einer Verletzung des Bedieners oder eines weiteren Passagiers oder einer mechanischen Beschädigung der Halterung verringert wird. Der Puffer 11 kann beispielsweise durch eine Stahlfeder ausgeführt werden.

Nach dem Entriegeln der Bedienkonsole 1 kann diese manuell in die in der Figur 2 gezeigte Präsentierstellung bewegt werden, in der sie durch die geschaffene Verschwenkbarkeit weiter ausgerichtet werden kann, wobei die Bedienkonsole 1 auch schon vor dem Erreichen der Präsentierstellung um die Schwenkachsen A, B und/oder C verschwenkbar sein kann. Die Schwenkbewegung ist vorteilhafterweise reibungsbehaftet, so dass die Präsentierstellung bis zu einer weiteren manuellen Handhabung erhalten bleibt. Der entsprechende Reibungswiderstand kann beispielsweise im Ausführungsbeispiel der Figur 3 durch die Passung im Kugelgelenk voreingestellt werden. Weiterhin kann der Reibungswiderstand bei den Schwenkbewegungen durch die Feder 12, die das Blockadeelement 19 in der Präsentierstellung auf die Kugel des Kugelgelenks 5 drückt, erreicht und/oder eingestellt werden.

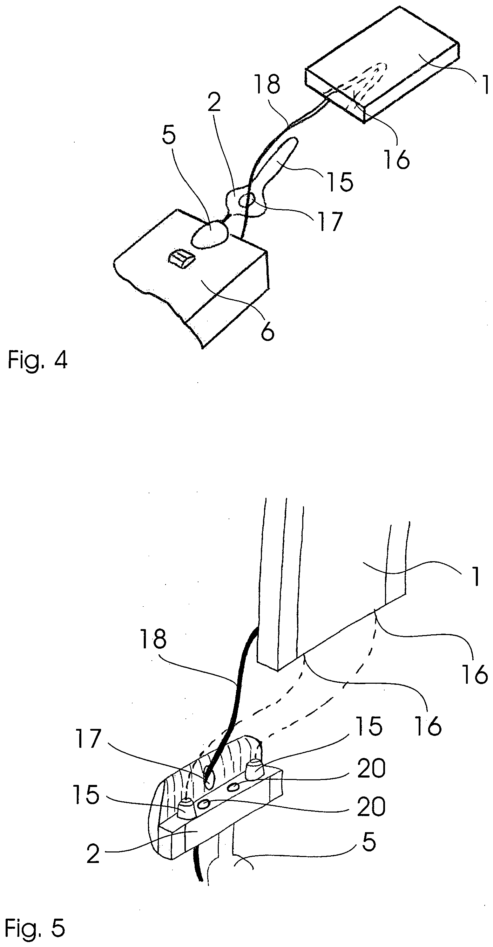

In der Figur 4 ist ein weiteres bevorzugtes Ausführungsbeispiel zu erkennen, wobei eine Bedienkonsole 1 in einer von einem Haltearm 2 gelösten Stellung gezeigt ist. Die Bedienkonsole 1 weist eine Fingeraufnahme 16 und der Haltearm 2 einen an die Form der Fingeraufnahme 16 angepassten Finger 15 auf, welcher zur Halterung der Bedienkonsole 1 in die Fingeraufnahme 16 eingeführt wird und z.B. durch eine Verrastung lösbar befestigt wird. Der Finger 15 ersetzt in diesem Fall die Finger 3,4,8 und 9 des in den Figuren 1 bis 3 gezeigten Ausführungsbeispiels, so dass bei einem Ausführungsbeispiel mit einer Aufnahme 7 die Bedienkonsole 1 mit einem geringeren äußeren Spalt in einer geometrisch angepassten Aufnahme 7 angeordnet werden kann. Ferner kann die Bedienkonsole 1 dadurch auch mit einem ästhetisch hochwertigen Erscheinungsbild an einen entsprechenden Freischnitt der Außenkontur der Armlehne oder Rückenlehne herangeklappt werden, ohne dass der Haltearm 2 selbst von außen erkennbar ist. Ferner ist an dem Haltearm 2 eine Führung 17 in Form einer Öffnung in dem Haltearm 2 vorgesehen, durch die das elektrische Kabel 18 der Bedienkonsole 1 hindurchgeführt ist.

In Figur 5 ist ein alternatives Ausführungsbeispiel gezeigt, wobei an dem Haltearm 2 zwei Finger 15 angeordnet sind, die in zwei Fingeraufnahmen 16 der Bedienkonsole 1 eingeführt werden können. Die Finger 15 sind in diesem Ausführungsbeispiel als konische Führungsbolzen mit einer Fase ausgeführt. In der aufgesteckten Position wird die Bedienkonsole 1 durch zwei Magnete 20 gehalten, die die Bedienkonsole 1 lösbar am Haltearm 2 halten. Ein entsprechendes Gegenstück zu den Magneten ist in der Bedienkonsole 1 angeordnet, wobei das Gegenstück ein Magnet in gegenpoliger Ausrichtung oder ein ferromagnetisches Element sein können.

## Patentansprüche

1. Halterung für eine Bedienkonsole (1) oder ein Anzeigegerät an einem Flugzeugsitz, wobei
- die Halterung in einer Armlehne (6), Rückenlehne oder der Verkleidung des Flugzeugsitzes angeordnet werden kann, wobei
- die Bedienkonsole (1) oder das Anzeigegerät von der Halterung abnehmbar ist, wobei
- die Halterung einen Haltearm (2) aufweist, von dem die Bedienkonsole (1) oder das Anzeigegerät gehalten werden kann, und
- die oder das an dem Haltearm (2) gehaltene Bedienkonsole (1) oder Anzeigegerät in einer Sicherungsstellung in der Halterung festlegbar ist, und
- die oder das an dem Haltearm (2) gehaltene Bedienkonsole (1) oder Anzeigegerät aus der Sicherungsstellung in eine Präsentierstellung bewegbar ist, und
- die Bedienkonsole (1) oder das Anzeigegerät nur in der Präsentierstellung von dem Haltearm (2) abnehmbar ist, und
- die Bedienkonsole (1) oder das Anzeigegerät in der Präsentierstellung um wenigstens eine Schwenkachse (A) verschwenkbar ist,
**dadurch gekennzeichnet, dass**
- der Haltearm (2) mittels eines Kugelgelenkes (5) an der Halterung und/oder die Bedienkonsole (1) oder das Anzeigegerät mittels eines Kugelgelenkes (5) an dem Haltearm (2) gehalten werden kann, und
- dass in der Sicherungsstellung ein federbelastetes Blockadelement (19) in das Kugelgelenk (5) eingreift, und
- dass die Halterung einen Sicherungsstift (14) aufweist, wobei der Sicherungsstift (14) in der Sicherungsstellung in eine Ausnahme der Bedienkonsole (1) oder in das Anzeigegerät eingreifen kann.

2. Halterung nach Anspruch 1, **dadurch gekennzeichnet, dass** das Kugelgelenk (5) dazu eingerichtet ist, den Haltearm (2) beim Überschreiten einer definierten Last freizugeben.

3. Halterung nach Anspruch 2, **dadurch gekennzeichnet, dass** die Bedienkonsole (1) oder das Anzeigegerät eine kardanische Aufhängung an dem Haltearm (2) aufweist.

4. Halterung nach einem der vorangehenden Ansprüche, **dadurch gekennzeichnet, dass** die Schwenkachsen (A,B,C) des Haltearms (2) in der Sicherungsstellung durch das Blockadeelement (19) festlegbar sind.

5. Halterung nach einem der vorangehenden Ansprüche, **dadurch gekennzeichnet, dass** der Haltearm (2) mehrere die Bedienkonsole (1) oder das Anzeigegerät an ihrer äußeren Randseite umfassende Finger (3,4,8,9) aufweist.

6. Halterung nach einem der vorangehenden Ansprüche, **dadurch gekennzeichnet, dass** die Bedienkonsole (1) oder das Anzeigegerät mindestens eine Fingeraufnahme (16) aufweist, in die der Haltearm (2) mit mindestens einem Finger (15) einführbar ist.

7. Halterung nach einem der vorangehenden Ansprüche, **dadurch gekennzeichnet, dass** die Bedienkonsole (1) oder das Anzeigegerät an dem Haltearm (2) durch wenigstens einen in der Bedienkonsole (1) oder in dem Anzeigegerät und/oder im Haltearm (2) angeordneten Magneten (20) gehalten wird.

8. Halterung nach einem der vorangehenden Ansprüche, **dadurch gekennzeichnet, dass** die Halterung eine Feder (10) aufweist, welche die Bedienkonsole (1) oder das Anzeigegerät nach dem Befreien aus der Sicherungsstellung in eine vorbestimmte Stellung ausrichtet.

9. Halterung nach einem der vorangehenden Ansprüche, **dadurch gekennzeichnet, dass** die Halterung eine Aufnahme (7) aufweist, die in der Sicherungsstellung die Bedienkonsole (1) oder das Anzeigegerät in der Halterung festlegt.

10. Halterung nach einem der vorangehenden Ansprüche, **dadurch gekennzeichnet, dass** zwischen der Halterung und dem Haltearm ein Puffer (11) angeordnet ist, welcher eine elastische Nachgiebigkeit aufweist.

11. Halterung nach einem der vorangehenden Ansprüche, **dadurch gekennzeichnet, dass** die Bedienkonsole (1) oder das Anzeigegerät um eine Achse (C) drehfest am Haltearm (2) angeordnet ist, wobei die Achse (C) orthogonal zu der Schwenkachse (A) steht.

## Claims

1. Holder for a control console (1) or a display device on an aircraft seat, wherein
- the holder can be arranged in an armrest (6), backrest or the trim of the aircraft seat,
- the control console (1) or display device being removable from the holder, wherein
- the holder comprises a support arm (2), by means of which the control console (1) or display device can be supported, and
- the control console (1) or display device which is supported on the support arm (2) can be fixed in the holder in a secured position, and
- the control console (1) or display device which is supported on the support arm (2) can be moved out of the secured position into a display position, and
- the control console (1) or display device can only be removed from the support arm (2) in the display position, and
- the control console (1) or display device can be pivoted about at least one pivot axis (A) in the display position,
**characterised in that**
- the support arm (2) can be supported on the holder by means of a ball joint (5) and/or the control console (1) or display device can be supported on the support arm (2) by means of a ball joint (5), and
- that, in the secured position, a spring-loaded blocking element (19) engages in the ball joint (5), and
- that the holder comprises a securing pin (14), wherein said securing pin (14), in the secured position, can engage in an indentation in the control console (1) or in the display device.

2. Holder according to claim 1, **characterised in that** the ball joint (5) is designed to release the support arm (2) when a defined load is exceeded.

3. Holder according to claim 2, **characterised in that** the control console (1) or display device is suspended by cardan joints on the support arm (2).

4. Holder according to any of the preceding claims, **characterised in that** the pivot axes (A, B, C) of the support arm (2) can be fixed in the secured position by the blocking element (19).

5. Holder according to any of the preceding claims, **characterised in that** the support arm (2) comprises a plurality of fingers (3, 4, 8, 9) which clasp the sides of the control console (1) or display device.

6. Holder according to any of the preceding claims, **characterised in that** the control console (1) or display device comprises at least one finger receptacle (16), into which the support arm (2) can be inserted with at least one finger (15).

7. Holder according to any of the preceding claims, **characterised in that** the control console (1) or display device is supported on the support arm (2) by at least one magnet (20) arranged in the control console (1) or display device and/or in the support arm (2).

8. Holder according to any of the preceding claims, **characterised in that** the holder comprises a spring (10), which orients the control console (1) or display device into a predetermined position after it has been released from the secured position.

9. Holder according to any of the preceding claims, **characterised in that** the holder comprises a receptacle (7) which fixes the control console (1) or display device in the holder in the secured position.

10. Holder according to any of the preceding claims, **characterised in that** a buffer (11) having resilient flexibility is arranged between the holder and the support arm.

11. Holder according to any of the preceding claims, **characterised in that** the control console (1) or display device is arranged on the support arm (2) so as not to rotate about an axis (C), the axis (C) being orthogonal to the pivot axis (A).

## Revendications

1. Support pour une console de commande (1) ou un appareil d'affichage sur un siège d'avion, dans lequel
- le support peut être agencé dans un accoudoir (6), un dossier ou le garnissage du siège d'avion, dans lequel
- la console de commande (1) ou l'appareil d'affichage peut être détaché du support, dans lequel
- le support comporte un bras de maintien (2), la console de commande (1) ou l'appareil d'affichage pouvant être maintenu par celui-ci, et
- la console de commande (1) ou l'appareil d'affichage maintenu sur le bras de maintien (2) peut être fixée dans une position de sécurité dans le support, et
- la console de commande (1) ou l'appareil d'affichage maintenu sur le bras de maintien (2) peut être déplacé hors de la position de sécurité dans une position de présentation, et
- la console de commande (1) ou l'appareil d'affichage peut être détaché du bras de maintien (2) uniquement dans la position de présentation, et
- la console de commande (1) ou l'appareil d'affichage peut être pivoté autour d'au moins un axe de pivot (A) dans la position de présentation,
**caractérisé en ce que**
- le bras de maintien (2) peut être maintenu sur le support au moyen d'une articulation sphérique (5) et/ou la console de commande (1) ou l'appareil d'affichage peut être maintenu sur le bras de maintien (2) au moyen d'une articulation sphérique (5), et
- **en ce que**, dans la position de sécurité, un élément de blocage (19) sollicité par un ressort entre en prise dans l'articulation sphérique (5), et
- **en ce que** le support comporte une came de sécurité (14), dans lequel la came de sécurité (14) peut, dans la position de sécurité, entrer en prise dans un évidement de la console de commande (1) ou dans l'appareil d'affichage.

2. Support selon la revendication 1, **caractérisé en ce que** l'articulation sphérique (5) est disposée de façon à libérer le bras de maintien (2) lorsqu'une charge définie est excédée.

3. Support selon la revendication 2, **caractérisé en ce que** la console de commande (1) ou l'appareil d'affichage comporte une suspension à cardan sur le bras de maintien (2).

4. Support selon l'une des revendications précédentes, **caractérisé en ce que** les axes de pivot (A, B, C) du bras de maintien (2) peuvent être fixés dans la position de sécurité par l'élément de blocage (19).

5. Support selon l'une des revendications précédentes, **caractérisé en ce que** le bras de maintien (2) comporte plusieurs doigts (3, 4, 8, 9) entourant la console de commande (1) ou l'appareil d'affichage sur son bord latéral extérieur.

6. Support selon l'une des revendications précédentes, **caractérisé en ce que** la console de commande (1) ou l'appareil d'affichage comporte au moins un logement de doigt (16), le bras de maintien (2) pouvant être introduit dans celui-ci avec au moins un doigt (15).

7. Support selon l'une des revendications précédentes, **caractérisé en ce que** la console de commande (1) ou l'appareil d'affichage est maintenu sur le bras de maintien (2) par au moins un aimant (20) agencé dans la console de commande (1) ou l'appareil d'affichage et/ou dans le bras de maintien (2).

8. Support selon l'une des revendications précédentes, **caractérisé en ce que** le support comporte un ressort (10), lequel oriente la console de commande (1) ou l'appareil d'affichage dans une position prédéfinie après libération hors de la position de sécurité.

9. Support selon l'une des revendications précédentes, **caractérisé en ce que** le support comporte un logement (7), lequel, dans la position de sécurité, fixe la console de commande (1) ou l'appareil d'affichage dans le support.

10. Support selon l'une des revendications précédentes, **caractérisé en ce qu'**un tampon (11) est agencé entre le support et le bras de maintien, présentant une déformation élastique.

11. Support selon l'une des revendications précédentes, **caractérisé en ce que** la console de commande (1) ou l'appareil d'affichage est agencé sur le bras de maintien (2) sans rotation possible autour de l'axe (C), dans lequel l'axe (C) est orthogonal à l'axe de pivot (A).
